# EUROPÄISCHE PATENTSCHRIFT

(11) **EP 3 234 451 B1**
(45) Veröffentlichungstag und Bekanntmachung des Hinweises auf die Patenterteilung: **13.03.2019**
(21) Anmeldenummer: 15793743.4
(22) Anmeldetag: 04.11.2015
(51) Int. Cl.: F21S 41/43, F21S 41/365, F21S 41/683, F21S 41/141

(54) **BELEUCHTUNGSEINRICHTUNG**
LIGHTING SYSTEM
DISPOSITIF D'ÉCLAIRAGE

(30) Priorität: 19.12.2014 DE 102014226646
(43) Veröffentlichungstag der Anmeldung: 25.10.2017
(73) Patentinhaber: OSRAM GmbH, 80807 München (DE)
(72) Erfinder: GUREVICH, Igor, 66119 Saarbrücken (DE)
(86) Internationale Anmeldenummer: PCT/EP2015/075699
(87) Internationale Veröffentlichungsnummer: WO 2016/096234

(56) Entgegenhaltungen:
- EP-A2- 2 472 176
- CN-A- 102 367 939
- DE-A1-102012 016 144
- DE-U1- 20 206 833
- JP-A- 2005 276 805
- JP-A- 2008 041 271
- JP-A- 2010 176 981
- KR-A- 20130 010 836
- US-A1- 2007 285 939
- US-A1- 2011 261 576

## Beschreibung

Die Erfindung betrifft eine Beleuchtungseinrichtung gemäß dem Oberbegriff des Anspruchs 1.

### I. Stand der Technik

Eine derartige Beleuchtungseinrichtung ist beispielsweise in JP2010176981 offenbart. Die Offenlegungsschrift DE 102013207845 A1 beschreibt eine Beleuchtungseinrichtung mit mehreren Lichtquellen, deren Licht mittels einer Primäroptik gesammelt und in eine Zwischenlichtverteilung überführt wird, die mittels einer Sekundäroptik optisch weiter verarbeitet wird.

### II. Darstellung der Erfindung

Es ist Aufgabe der Erfindung, eine gattungsgemäße Beleuchtungseinrichtung bereitzustellen, welche die Erzeugung einer normgerechten Lichtverteilung im Vorfeld des Kraftfahrzeugs ermöglicht und insbesondere die Ausbildung einer Hell-Dunkel-Grenze, beispielsweise für ein Abblendlicht, ermöglicht.

Diese Aufgabe wird erfindungsgemäß durch eine Beleuchtungseinrichtung mit den Merkmalen aus dem Anspruch 1 gelöst. Besonders vorteilhafte Ausführungen der Erfindung sind in den abhängigen Ansprüchen beschrieben.

Die erfindungsgemäße Beleuchtungseinrichtung besitzt eine Lichterzeugungsvorrichtung und mindestens eine, vorzugsweise asphärisch ausgebildete Kollimatorlinse, die zur Kollimation des von der Lichterzeugungsvorrichtung emittierten Lichts dient. Außerdem besitzt die erfindungsgemäße Beleuchtungseinrichtung einen ersten Parabolspiegel, der vorzugsweise als Rotationsparaboloid geformt ist, eine lichtreflektierend ausgebildete Blende und einen zweiten Parabolspiegel, der vorzugsweise als Rotationsparaboloid geformt ist, wobei die Blende zwischen den beiden Parabolspiegeln angeordnet ist und sich bis zu einem gemeinsamen Fokus der beiden Parabolspiegel erstreckt, und wobei die Parabolspiegel und die Lichterzeugungsvorrichtung sowie die mindestens eine Kollimatorlinse derart angeordnet sind, dass von der Lichterzeugungsvorrichtung emittiertes und der mindestens einen Kollimatorlinse kollimiertes Licht auf die Reflexionsfläche des ersten Parabolspiegels gelenkt wird und von der Reflexionsfläche des ersten Parabolspiegels reflektiertes Licht auf die Reflexionsfläche des zweiten Parabolspiegels oder auf die Blende trifft.

Aufgrund ihrer vorgenannten Merkmale ermöglicht die erfindungsgemäße Beleuchtungseinrichtung eine scharfe Abbildung ihrer Lichtquelle in das Fernfeld der Beleuchtungseinrichtung. Mit Hilfe der Blende wird ein Teil des von der Lichterzeugungsvorrichtung emittierten und an der Reflexionsfläche des ersten Parabolspiegel reflektierten Lichts ausgeblendet und dadurch eine scharfe Hell-Dunkelgrenze erzeugt, die mittels der Parabolspiegel in das Fernfeld der Beleuchtungseinrichtung projiziert wird. Im Fernfeld entsteht dadurch ein scharfes Abbild der Hell-Dunkelgrenze. Die Lichtverteilung im Fernfeld kann durch die Form der Lichtquelle und die Form der Blende beeinflusst werden.

Zusätzlich weist die erfindungsgemäße Beleuchtungseinrichtung einen sphärischen Spiegel auf, der derart angeordnet ist, dass sein Fokus im gemeinsamen Fokus der beiden Parabolspiegel angeordnet ist und an der Blende reflektiertes Licht auf die Reflexionsfläche des zweiten Parabolspiegels gelenkt wird.

Durch die vorgenannten zusätzlichen Merkmale der erfindungsgemäßen Beleuchtungseinrichtung wird die verfügbare Lichtintensität erhöht, weil das von der Lichterzeugungsvorrichtung emittierte Licht, das zwecks Erzeugung einer Hell-Dunkel-Grenze mittels der Blende ausgeblendet wird, mit Hilfe des sphärischen Spiegels auf den zweiten Parabolspiegel gelenkt wird und damit ebenfalls der Lichtverteilung im Vorfeld vor der Beleuchtungseinrichtung bzw. vor dem Kraftfahrzeug zugeführt wird. Der sphärische Spiegel erzeugt im gemeinsamen Fokus ein Abbild der von der Blende abgeschatteten lichtemittierenden Oberfläche der Lichterzeugungsvorrichtung, das dem vom ersten Parabolspiegel erzeugten, von der Blende nicht abgeschatteten Abbild der lichtemittierenden Oberfläche der Lichterzeugungsvorrichtung im gemeinsamen Fokus überlagert wird. Da das vom sphärischen Spiegel erzeugte Abbild lediglich winkelverdreht gegenüber dem vom ersten Parabolspiegel erzeugten Abbild ist, bleibt die von der Blende erzeugte Hell-Dunkel-Grenze erhalten und die Lichtintensitäten beider Abbilder addieren sich. Mittels des zweiten Parabolspiegels werden die überlagerten Abbilder in das Fernfeld der Beleuchtungseinrichtung bzw. in das Vorfeld vor dem Kraftfahrzeug projiziert.

Vorteilhafterweise ist der sphärische Spiegel der erfindungsgemäßen Beleuchtungseinrichtung derart angeordnet und ausgebildet, dass er im gemeinsamen Fokus ein Abbild einer Lichtverteilung mit einem Vergrößerungsfaktor vom Betrag 1 erzeugt. Dadurch wird gewährleistet, dass das vom sphärischen Spiegel erzeugte Abbild die gleiche Größe und Form wie das vom ersten Parabolspiegel erzeugte Abbild besitzt und die beiden Abbilder im gemeinsamen Fokus im wesentlichen deckungsgleich überlagert werden können.

Der sphärische Spiegel der erfindungsgemäßen Beleuchtungseinrichtung ist vorteilhafterweise einteilig mit dem ersten Parabolspiegel ausgebildet. Dadurch kann auf eine zusätzliche Halterung für den sphärischen Spiegel verzichtet werden.

Vorzugsweise ist der sphärische Spiegel der erfindungsgemäßen Beleuchtungseinrichtung bewegbar ausgebildet, um eine Justierung des sphärischen Spiegels gegenüber der Blende und dem ersten Parabolspiegel zu ermöglichen.

Als Lichtquelle dient vorzugsweise eine lichtemittierende Oberfläche der Lichterzeugungsvorrichtung der erfindungsgemäßen Beleuchtungseinrichtung, deren Licht mittels der vorzugsweise asphärisch ausgebildeten Kollimatorlinse kollimiert wird.

Vorzugsweise umfasst die Lichterzeugungsvorrichtung der erfindungsgemäßen Beleuchtungseinrichtung mindestens eine Halbleiterlichtquelle, die besonders bevorzugt als Laserdiode ausgebildet ist, und ein Lichtwellenlängenkonversionselement zur Wellenlängenkonversion des von der mindestens einen Halbleiterlichtquelle emittierten Lichts, um weißes Licht zu erzeugen, das eine Mischung aus nicht-konvertiertem Primärlicht und vom Lichtwellenlängenkonversionselement konvertiertem Sekundärlicht ist. Vorzugsweise werden blaues Licht emittierende Laserdioden und ein Lichtwellenlängenkonversionselement auf der Basis von mit Cer dotiertem Yttriumaluminiumgranat (YAG:Ce) verwendet, um blaues Primärlicht der Laserdioden anteilig in gelbes Sekundärlicht zu konvertieren. Die Oberfläche des Lichtwellenlängenkonversionselements strahlt dadurch weißes Licht ab, das eine Mischung aus blauem Primärlicht und gelbem Sekundärlicht ist. Die lichtabstrahlende Oberfläche des Lichtwellenlängenkonversionselements kann daher selbst als Lichtquelle angesehen werden. Durch die Formgebung der lichtabstrahlenden Oberfläche des Lichtwellenlängenkonversionselements und die Formgebung der Blende kann daher die Lichtverteilung im Fernfeld der erfindungsgemäßen Beleuchtungseinrichtung beeinflusst werden. Eine geeignete, fünf Laserdioden und ein Lichtwellenlängenkonversionselement umfassende Lichterzeugungsvorrichtung für die erfindungsgemäße Beleuchtungseinrichtung ist beispielsweise in der deutschen Patentanmeldung mit dem Aktenzeichen 10 2014 220 276.0 offenbart. Die vorzugsweise asphärisch ausgebildete Kollimatorlinse der erfindungsgemäßen Beleuchtungseinrichtung ist vorzugsweise in einem Abstand von wenigen Millimeter von der lichtabstrahlenden Oberfläche des Lichtwellenlängenkonversionselements angeordnet. Sie entspricht beispielsweise der in Figur 2 der deutschen Patentanmeldung mit dem amtlichen Aktenzeichen 10 2014 220 276.0 offenbarten Linse mit dem Bezugszeichen 6, die in geringem Abstand von der lichtabstrahlenden Oberfläche des Lichtwellenlängenkonversionselements angeordnet ist.

Die Blende der erfindungsgemäßen Beleuchtungseinrichtung ist vorteilhafterweise bewegbar ausgebildet. Dadurch kann der Grad der Abschattung bzw. Ausblendung des von der Lichterzeugungsvorrichtung emittierten und am ersten Parabolspiegel reflektierten Lichts variiert werden. Beispielsweise kann im Fall einer defekten Lichterzeugungsvorrichtung, insbesondere im Fall eines defekten oder fehlenden Lichtwellenlängenkonversionselements, mittels der Blende eine vollständige Abschattung des von der Lichterzeugungsvorrichtung emittierten Lichts durchgeführt werden, indem die Blende im Bereich des gemeinsamen Fokus der beiden Parabolspiegel vollständig in den Strahlengang des an der Reflexionsfläche des ersten Parabolspiegels geschoben wird.

Die dem sphärischen Spiegel zugewandte Oberfläche der bevorzugt metallisch ausgeführten Blende ist bevorzugt als spekular spiegelnde Fläche ausgeführt, beispielsweise durch Polieren der Oberfläche und/oder durch geeignete Oberflächenverspiegelung, beispielsweise mit einer Gold- oder Silberbeschichtung. Alternativ oder zusätzlich kann die dem sphärischen Spiegel zugewandte Oberfläche der Blende auch diffus reflektierende und/oder Licht absorbierende Bereiche enthalten oder ganz diffus spiegelnd ausgeführt sein. Die dem sphärischen Spiegel zugewandte Oberfläche der Blende ist bevorzugt eben ausgeführt, kann aber auch Erhöhungen und/oder Vertiefungen des Materials aufweisen, beispielsweise konvexe, konkave und/oder freiförmig ausgeführte Oberflächenbereiche. Diese Erhöhungen und/oder Vertiefungen des Materials der Blende ermöglichen eine Modulation der an der Blende reflektieren Strahlung (Nutzlicht). Die beiden Parabolspiegel der erfindungsgemäßen Beleuchtungseinrichtung weisen vorzugsweise konkave Reflexionsflächen auf. Vorzugsweise sind die Reflexionsflächen der Parabolspiegel einander zugewandt und im Abstand der Summe ihrer Brennweiten angeordnet und derart ausgerichtet, dass von der Lichterzeugungsvorrichtung emittiertes und von der mindestens einen Kollimatorlinse kollimiertes Licht mittels der konkaven Reflexionsflächen der beiden Parabolspiegel zweimal umgelenkt wird, wobei mittels der Blende, die sich bis zum gemeinsamen Fokus der beiden Parabolspiegel erstreckt, ein Teil des Lichts ausgeblendet wird, das zum sphärischen Spiegel gelenkt und über diesen auf den zweiten Parabolspiegel reflektiert wird. Gemäß dem bevorzugten Ausführungsbeispiel der Erfindung sind die Parabolspiegel derart ausgerichtet, dass an der Reflexionsfläche des zweiten Parabolspiegels reflektiertes Licht im Wesentlichen parallel versetzt zu dem von der Lichterzeugungsvorrichtung und der Kollimatorlinse ausgehenden Licht verläuft.

Die erfindungsgemäße Beleuchtungseinrichtung ist vorzugsweise als Fahrzeugscheinwerfer oder als Bestandteil eines Fahrzeugscheinwerfers ausgebildet.

### III. Beschreibung des bevorzugten Ausführungsbeispiels

Nachstehend wird die Erfindung anhand eines bevorzugten Ausführungsbeispiels näher erläutert. Es zeigen:

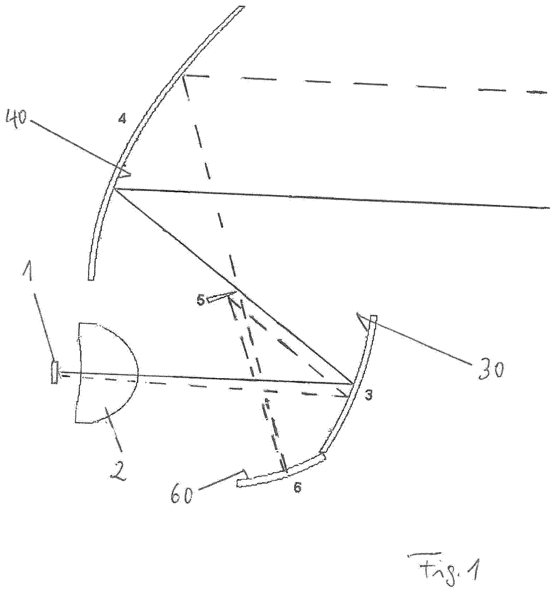

- Figur 1: eine Draufsicht auf die Beleuchtungseinrichtung gemäß einem bevorzugten Ausführungsbeispiel der Erfindung in schematischer Darstellung

Die Beleuchtungseinrichtung gemäß dem bevorzugten Ausführungsbeispiel der Erfindung ist Bestandteil eines Kraftfahrzeugscheinwerfers und besitzt eine Lichterzeugungsvorrichtung 1, eine asphärische Kollimatorlinse 2, einen ersten Parabolspiegel 3 mit einer konkaven, als Rotationsparaboloid geformten Reflexionsfläche 30 und eine lichtreflektierend ausgebildete optische Blende 5 sowie einen zweiten Parabolspiegel 4 mit einer konkaven, als Rotationsparaboloid geformten Reflexionsfläche 40 und einen sphärischen Spiegel 6 mit einer konkaven, sphärischen Reflexionsfläche 60.

Die Lichterzeugungsvorrichtung 1 besteht aus mehreren Laserdioden, die während des Betriebs blaues Licht emittieren und einem Lichtwellenlängenkonversionselement, auf das das von den Laserdioden emittierte Licht gelenkt wird. Das Lichtwellenlängenkonversionselement umfasst einen Gelb-Leuchtstoff (YAG:Ce), der das blaue, von den Laserdioden emittierte Licht (auch Primärlicht genannt) anteilig in gelbes Licht (auch Sekundärlicht genannt) konvertiert, so dass von der Oberfläche des Lichtwellenlängenkonversionselements weißes Licht emittiert wird, das eine Mischung aus blauem Primärlicht und gelbem Sekundärlicht ist. Die lichtemittierende Oberfläche des Lichtwellenlängenkonversionselements ist vorzugsweise kreisscheibenförmig ausgebildet. In Figur 1 bezeichnet das Bezugszeichen 1 die Lichterzeugungsvorrichtung bzw. die lichtemittierende Oberfläche des Lichtwellenlängenkonversionselements der Lichterzeugungsvorrichtung.

Im Abstand von beispielsweise 1 bis 5 mm ist die Kollimatorlinse 2 zur lichtemittierenden Oberfläche des Lichtwellenlängenkonversionselements der Lichterzeugungsvorrichtung 1 angeordnet. Die Kollimatorlinse 2 reduziert die Divergenz des von lichtemittierenden Oberfläche des Lichtwellenlängenkonversionselements der Lichterzeugungsvorrichtung 1 abgestrahlten weißen Lichts und lenkt es auf die konkave Reflexionsfläche 30 des ersten Parabolspiegels 3.

An der konkaven Reflexionsfläche 40 des zweiten Parabolspiegels 4 wird das Licht in seine ursprüngliche Richtung zurückgelenkt. Der Abstand zwischen den Parabolspiegeln 3, 4 entspricht der Summe der Brennweiten beider Parabolspiegel 3, 4. Die lichtreflektierend ausgebildete optische Blende 5 ist zwischen den beiden Parabolspiegeln 3, 4 angeordnet und erstreckt sich bis zum gemeinsamen Fokus der Parabolspiegel 3, 4.

Der sphärische Spiegel 6 ist unmittelbar neben dem ersten Parabolspiegel 3 derart angeordnet, dass sein Fokus mit dem gemeinsamen Fokus der beiden Parabolspiegel 3, 4 zusammenfällt und an der optischen Blende 5 reflektiertes Licht auf die konkave, sphärische Reflexionsfläche 60 des sphärischen Spiegels 6 gelenkt wird und von dieser zu der konkaven Reflexionsfläche 40 des zweiten Parabolspiegels 4 gelenkt wird.

Die asphärische Kollimatorlinse 2 und der erste Parabolspiegel 3 erzeugen im Bereich des gemeinsamen Fokus der beiden Parabolspiegel 3, 4 ein Abbild der kreisscheibenförmigen lichtemittierenden Oberfläche der Lichterzeugungsvorrichtung 1. Dieses Abbild ist ebenfalls kreisscheibenförmig. Der Durchmesser D2 dieses Abbildes berechnet sich aus dem Durchmesser D1 der kreisscheibenförmigen lichtemittierenden Oberfläche der Lichterzeugungsvorrichtung 1, der Brennweite F1 der Kollimatorlinse 2 und der Brennweite F2 des ersten Parabolspiegels 3 zu D2=D1·F2/F1.

Mittels der sich bis in den gemeinsamen Fokus erstreckenden optischen Blende 5 wird ein Teil des von der kreisscheibenförmigen lichtemittierenden Oberfläche der Lichterzeugungsvorrichtung 1 emittierten Lichts ausgeblendet und auf die Reflexionsfläche 60 des sphärischen Spiegels 6 gelenkt. Beispielsweise ist die Blende 5 derart angeordnet, dass die Hälfte des von der kreisscheibenförmigen lichtemittierenden Oberfläche der Lichterzeugungsvorrichtung 1 emittierten Lichts und damit eine Hälfte des vorgenannten kreisscheibenförmigen Abbilds ausgeblendet wird. Dieses Abbild nimmt daher die Form einer halben Kreisscheibe an und wird nachstehend als erstes Abbild bezeichnet. Der nicht von der Blende 5 reflektierte Teil des von der kreisscheibenförmigen lichtemittierenden Oberfläche der Lichterzeugungsvorrichtung 1 emittierten Lichts wird von der Reflexionsfläche 30 des ersten Parabolspiegels 3 direkt zur Reflexionsfläche 40 des zweiten Parabolspiegels 4 gelenkt.

Das von der Blende 5 auf den sphärischen Spiegel 6 gelenkte und an der Reflexionsfläche 60 des sphärischen Spiegels 6 reflektierte Licht erzeugt im gemeinsamen Fokus der Parabolspiegel 3, 4 und des sphärischen Spiegels 6 ein zweites Abbild der kreisscheibenförmigen lichtemittierenden Oberfläche der Lichterzeugungsvorrichtung 1, das ebenfalls die Form einer halben Kreisscheibe besitzt und dieselbe Größe sowie Ausrichtung wie das erste Abbild aufweist. Das erste Abbild wird im gemeinsamen Fokus der Parabolspiegel 3, 4 mit dem zweiten Abbild überlagert und mittels des zweiten Parabolspiegels 4 in das Fernfeld der Beleuchtungseinrichtung bzw. in das Vorfeld eines Kraftfahrzeugscheinwerfers projiziert. Dabei addieren sich die Lichtintensitäten beider Abbilder, so dass die Lichtintensität der Lichtverteilung im vorgenannten Fernfeld bzw. Vorfeld nahezu verdoppelt wird.

In Figur 1 ist exemplarisch mittels durchgezogenen Linien der Lichtstrahlengang für ein Lichtbündel schematisch dargestellt, das ohne Reflexion an der Blende 5 und am sphärischen Spiegel 6 die optische Anordnung der beiden Parabolspiegel 3, 4 passiert und zur Erzeugung des ersten Abbilds im gemeinsamen Fokus dient. Außerdem ist in Figur 1 exemplarisch mittels gestrichelter Linien der Lichtstrahlengang für ein Lichtbündel schematisch dargestellt, das nach Reflexion an der Blende 5 und am sphärischen Spiegel 6 die optische Anordnung der beiden Parabolspiegel 3, 4 passiert und zur Erzeugung des zweiten Abbilds im gemeinsamen Fokus dient.

Die Beleuchtungseinrichtung ist dazu eingerichtet, als Lichtmodul eines Kraftfahrzeugscheinwerfers allein oder im Zusammenwirken mit anderen Lichtmodulen desselben oder eines anderen Scheinwerfers eine normgerechte Lichtverteilung im Vorfeld des Kraftfahrzeugs erzeugen, insbesondere eine Hell-Dunkelgrenze, beispielsweise die Hell-Dunkelgrenze eines Abblendlichts.

Dazu wird das vom Lichtwellenlängenkonversionselement der Lichterzeugungsvorrichtung 1 emittierte Licht, das anteilig aus nicht-konvertiertem, von den Laserdioden emittiertem blauem Primärlicht, welches auf das Lichtwellenlängenkonversionselement gelenkt wird, und aus von dem Gelb-Leuchtstoff des Lichtwellenlängenkonversionselements erzeugtem Sekundärlicht besteht, von einer dem Lichtwellenlängenkonversionselement nachgelagerten, vorzugsweise asphärischen Sammellinse bzw. Kollimatorlinse kollimiert, bei der sowohl die Eintrittsseite als auch die Austrittseite asphärisch ausgeprägt ist.

Dabei kollimiert die Kollimatorlinse 2, welche als Asphäre oder als Achromat ausgebildet ist, das Licht von der Lichterzeugungsvorrichtung 1 und lenkt dieses auf die konkave Reflexionsfläche 30 des ersten Parabolspiegels 3, welcher dann ein Abbild der lichtemittierenden Oberfläche der Lichterzeugungsvorrichtung 1 bzw. des Lichtwellenlängenkonversionselements der Lichterzeugungsvorrichtung 1 in einer Zwischenbildebene erzeugt. Die Zwischenbildebene befindet sich im gemeinsamen Fokus der beiden Parabolspiegel 3, 4. Die konkave Reflexionsfläche 40 des zweiten Parabolspiegels 4 bildet dann das so erzeugte Zwischenbild scharf in das Fernfeld bzw. ins Unendliche ab. Der Querschnitt des Zwischenbildes bzw. des Abbildes des Lichtwellenlängenkonversionselements ist bei kreisscheibenförmigem Lichtwellenlängenkonversionselement kreisförmig ausgebildet.

Das Licht vom Lichtwellenlängenkonversionselement der Lichterzeugungsvorrichtung 1 ist also ein aus Anteilen von nicht-konvertiertem Primärlicht der blauemittierenden Laserdioden und dem Sekundärlicht des Gelb-Leuchtstoffs zusammengesetzt, ergibt also weißes, bzw. multichromes Licht.

Das Lichtwellenlängenkonversionselement besitzt vorzugsweise eine kreisscheibenförmige Abstrahlungsfläche bzw. ist selbst als kreisscheibenförmiges Lichtwellenlängenkonversionselement ausgebildet. Alternativ kann das Lichtwellenlängenkonversionselement auch eine polygonförmige Kontur, insbesondere eine rechteckige oder quadratische Kontur aufweisen. Die Licht emittierende Oberfläche des Lichtwellenlängenkonversionselements, welche der Kollimatorlinse 2 zugewandt ist, kann auch mit einer Abdeckung versehen sein, so dass nur ein gewünschter Oberflächenbereich, beispielsweise ein kreisscheibenförmiger Ausschnitt, zur Emission von Licht beiträgt.

Die Oberfläche des Lichtwellenlängenkonversionselements ist bevorzugt eben ausgestaltet.

In der oben genannten Zwischenbildebene ist die Blende 5 angebracht, die einen Teil des Strahlengangs reflektiert. Die Blende 5 wird dabei so positioniert, dass ein Bereich des Lichtstrahlengangs dergestalt abgedeckt wird, dass sich im Fernfeld eine richtig positionierte Hell-Dunkel-Grenze ausbildet. Die Kante der Blende 5 ist dabei bevorzugt geradlinig ausgeformt. Alternativ kann, sofern eine nicht geradförmige Hell-Dunkel-Grenze gewünscht ist, eine freiflächige Kantenform der Blende gewählt werden.

Die Dicke der Blende wird dabei so gewählt, dass sich keine störenden Schlagschatten ausbilden. So kann die Blendendicke am Abschattungsbereich einige ZehntelMillimetern bis zu einigen Millimetern betragen; alternativ kann die Blendenkante des Abschattungsbereichs auch messerschneidenförmig zulaufen und eine spitze Kante ausbilden. Die Blende 5 kann massiv ausgeführt sein, beispielsweise aus einem gut wärmeleitenden Metall.

Mittels des sphärischen Spiegels 6 wird der von der Blende 5 ausgeblendete Teil des von der Lichterzeugungsvorrichtung 1 emittierten Lichts recycelt und ebenfalls zur Erzeugung der gewünschten Lichtverteilung im Fernfeld der Beleuchtungseinrichtung bzw. im Vorfeld eines Kraftfahrzeugscheinwerfers genutzt.

## Patentansprüche

1. Beleuchtungseinrichtung mit
- einer Lichterzeugungsvorrichtung (1) und
- mindestens einer, vorzugsweise asphärisch ausgebildeten Kollimatorlinse (2), die zur Kollimation des von der Lichterzeugungsvorrichtung (1) emittierten Lichts dient, wobei die Beleuchtungseinrichtung zusätzlich folgende Merkmale aufweist:
- einen ersten Parabolspiegel (3),
- eine optische Blende (5), die lichtreflektierend ausgebildet ist,
- einen zweiten Parabolspiegel (4), **dadurch gekennzeichnet, dass** die Blende (5) zwischen den beiden Parabolspiegeln (3, 4) angeordnet ist und sich bis zu einem gemeinsamen Fokus der beiden Parabolspiegel (3, 4) erstreckt, wobei der Parabolspiegel (3) und die Lichterzeugungsvorrichtung (1) sowie die mindestens eine Kollimatorlinse (2) derart angeordnet sind, dass von der Lichterzeugungsvorrichtung (1) emittiertes und der mindestens einen Kollimatorlinse (2) kollimiertes Licht auf die Reflexionsfläche des ersten Parabolspiegels (3) gelenkt wird und von der Reflexionsfläche des ersten Parabolspiegels (3) reflektiertes Licht auf die Reflexionsfläche des zweiten Parabolspiegels (4) oder auf die Blende(5) trifft, und
- die Beleuchtungsvorrichtung zusätzlich einen sphärischen Spiegel (6) aufweist, der derart angeordnet ist, dass sein Fokus im gemeinsamen Fokus der Parabolspiegel (3, 4) angeordnet ist und an der Blende (5) reflektiertes Licht auf die Reflexionsfläche des sphärischen Spiegels (6) trifft und von dieser auf die Reflexionsfläche des zweiten Parabolspiegels (4) gelenkt wird.

2. Beleuchtungseinrichtung nach Anspruch 1, wobei der sphärische Spiegel (6) derart angeordnet und ausgebildet ist, dass er im gemeinsamen Fokus ein Abbild einer Lichtverteilung mit einem Vergrößerungsfaktor vom Betrag 1 erzeugt.

3. Beleuchtungseinrichtung nach Anspruch 1 oder 2, wobei der sphärische Spiegel (6) einteilig mit dem ersten Parabolspiegel (3) ausgebildet ist.

4. Beleuchtungseinrichtung nach einem der Ansprüche 1 bis 3, wobei der sphärische Spiegel (6) bewegbar ist.

5. Beleuchtungseinrichtung nach einem der Ansprüche 1 bis 4, wobei die optische Blende (5) bewegbar ist.

6. Beleuchtungseinrichtung nach einem der Ansprüche 1 bis 5, wobei Lichterzeugungsvorrichtung (1) mindestens eine Halbleiterlichtquelle und ein Lichtwellenlängenkonversionselement umfasst.

7. Beleuchtungseinrichtung nach Anspruch 6, wobei die mindestens eine Halbleiterlichtquelle als Laserdiode ausgebildet ist.

8. Beleuchtungseinrichtung nach einem der Ansprüche 1 bis 7, die als Fahrzeugscheinwerfer oder als Bestandteil eines Fahrzeugscheinwerfers ausgebildet ist.

## Claims

1. Lighting apparatus comprising
- a light generating device (1) and
- at least one collimator lens (2), preferably embodied in an aspherical fashion, which serves for collimating the light emitted by the light generating device (1), wherein the lighting apparatus additionally comprises the following features:
- a first parabolic mirror (3),
- an optical diaphragm (5) embodied in a light reflecting fashion,
- a second parabolic mirror (4), **characterized in that** the diaphragm (5) is arranged between the two parabolic mirrors (3, 4) and extends as far as a common focus of the two parabolic mirrors (3, 4), wherein the parabolic mirror (3) and the light generating device (1) and also the at least one collimator lens (2) are arranged in such a way that light which is emitted by the light generating device (1) and collimated by the at least one collimator lens (2) is directed onto the reflection surface of the first parabolic mirror (3) and light reflected by the reflection surface of the first parabolic mirror (3) impinges on the reflection surface of the second parabolic mirror (4) or on the diaphragm (5), and
- the lighting apparatus additionally comprises a spherical mirror (6), which is arranged in such a way that its focus is arranged at the common focus of the parabolic mirrors (3, 4) and light reflected at the diaphragm (5) impinges on the reflection surface of the spherical mirror (6) and is directed from said reflection surface onto the reflection surface of the second parabolic mirror (4).

2. Lighting apparatus according to Claim 1, wherein the spherical mirror (6) is arranged and embodied in such a way that it generates an image of a light distribution with a magnification factor having the absolute value 1 at the common focus.

3. Lighting apparatus according to Claim 1 or 2, wherein the spherical mirror (6) is embodied integrally with the first parabolic mirror (3).

4. Lighting apparatus according to any of Claims 1 to 3, wherein the spherical mirror (6) is movable.

5. Lighting apparatus according to any of Claims 1 to 4, wherein the optical diaphragm (5) is movable.

6. Lighting apparatus according to any of Claims 1 to 5, wherein the light generating device (1) comprises at least one semiconductor light source and a light wavelength conversion element.

7. Lighting apparatus according to Claim 6, wherein the at least one semiconductor light source is embodied as a laser diode.

8. Lighting apparatus according to any of Claims 1 to 7, which is embodied as a vehicle headlight or as part of a vehicle headlight.

## Revendications

1. Appareil d'éclairage, muni de
- un dispositif de production de lumière (1) et
- au moins une lentille de collimation (2) préférentiellement réalisée de manière asphérique, qui sert pour une collimation de la lumière émise par le dispositif de production de lumière (1),
dans lequel l'appareil d'éclairage présente de manière supplémentaire les caractéristiques ci-dessous :
- un premier miroir parabolique (3),
- un diaphragme optique (5) qui est réalisé de manière à réfléchir la lumière,
- un deuxième miroir parabolique (4),
**caractérisé en ce que** le diaphragme (5) est agencé entre les deux miroirs paraboliques (3, 4) et s'étend jusqu'à un foyer commun des deux miroirs paraboliques (3, 4), dans lequel le miroir parabolique (3) et le dispositif de production de lumière (1) ainsi que la au moins une lentille de collimation (2) sont agencés de manière à ce que de la lumière émise par le dispositif de production de miroirs (1) et collimatée par la au moins une lentille de collimation (2) soit déviée sur la surface de réflexion du premier miroir parabolique (3) et de manière à ce que de la lumière réfléchie par la surface de réflexion du premier miroir parabolique (3) frappe la surface de réflexion du deuxième miroir parabolique (4) ou le diaphragme (5), et
- l'appareil d'éclairage présente de manière supplémentaire un miroir sphérique (6) qui est agencé de manière à ce que son foyer soit agencé dans le foyer commun du miroir parabolique (3, 4) et de manière à ce que de la lumière réfléchie au niveau du diaphragme (5) frappe la surface de réflexion du miroir sphérique (6) et soit déviée par celle-ci sur la surface de réflexion du deuxième miroir parabolique (4).

2. Appareil d'éclairage selon la revendication 1, dans lequel le miroir sphérique (6) est agencé et réalisé de manière à ce qu'il produise dans le foyer commun une image d'une répartition de lumière avec un facteur de grossissement de montant 1.

3. Appareil d'éclairage selon la revendication 1 ou 2, dans lequel le miroir sphérique (6) est réalisé d'un seul tenant avec le premier miroir parabolique (3).

4. Appareil d'éclairage selon l'une quelconque des revendications 1 à 3, dans lequel le miroir sphérique (6) est mobile.

5. Appareil d'éclairage selon l'une quelconque des revendications 1 à 4, dans lequel le diaphragme optique (5) est mobile.

6. Appareil d'éclairage selon l'une quelconque des revendications 1 à 5, dans lequel le dispositif de production de lumière (1) comprend au moins une source lumineuse à semi-conducteurs et un élément de conversion de longueur d'onde lumineuse.

7. Appareil d'éclairage selon la revendication 6, dans lequel la au moins une source lumineuse à semi-conducteurs est réalisée sous forme de diode laser.

8. Appareil d'éclairage selon l'une quelconque des revendications 1 à 7, qui est réalisé sous forme de phare de véhicule ou sous forme d'élément constitutif d'un phare de véhicule.
